# EUROPEAN PATENT SPECIFICATION

(11) **EP 1 163 248 B1**
(45) Date of publication and mention of the grant of the patent: **22.09.2004**
(21) Application number: 00911158.4
(22) Date of filing: 16.03.2000
(51) Int. Cl.: C07H 13/06, A23L 3/3562, A23L 1/035, C09K 15/06, C12P 7/62, C12N 9/20

(54) **1,5-ANHYDRO-D-FRUCTOSE SUBSTITUTED WITH A HYDROPHOBIC GROUP FOR USE AS ANTI-OXIDANT AND/OR EMULSIFIER**
1,5-ANHYDRO-D-FRUKTOSE SUBSTITUIERT MIT EINER HYDROPHOBEN GRUPPE ZUR VERWENDUNG ALS ANTIOXIDANT UND/ODER EMULGATOR
1,5-ANHYDRO-D-FRUCTOSE SUBSTITUEE PAR UN GROUPE HYDROPHOBE, SERVANT D'ANTI-OXYDANT ET/OU D'EMULSIFIANT

(30) Priority: 19.03.1999 GB 9906458
(43) Date of publication of application: 19.12.2001
(73) Proprietor: DANISCO A/S, 1001 Copenhagen K. (DK)
(72) Inventor: ANDERSEN, Sören, Möller, 7260 Sdr. Omme (DK); MARCUSSEN, Jan, 1210 Copenhagen K (DK); LUNDT, Inge, 2980 Kokkedal (DK); YU, Shukun, 212 40 Malmoe (SE)
(74) Representative: Harding, Charles Thomas
(86) International application number: PCT/IB2000/000345
(87) International publication number: WO 2000/056745

(56) References cited:
- WO-A-95/10616
- D. PLUSQUELLEC AND K. BACZKO: "Sugar chemistry without protecting groups: a novel regioselective synthesis of 6-O-acyl-D-glucopyranoses and methyl-6-O-acyl-alfa-D-glucopyranosides" TETRAHEDRON LETTERS, vol. 28, no. 33, 1987, pages 3809-3812, XP002145446 cited in the application
- A. DUCRET ET AL.: "Characterization of enzymatically prepared biosurfactants" JOURNAL OF THE AMERICAN OIL CHEMIST SOCIETY, vol. 73, no. 1, 1996, pages 109-113, XP002145447 cited in the application
- ANDERSEN ET AL.: "1,5-Anhydro-D-fructose: regioselective acylation with fatty acids" CARBOHYDRATE RESEARCH, vol. 320, no. 3-4, 1999, pages 250-256, XP000934038

## Description

The present invention relates to an anti-oxidant composition.

Anti-oxidants are required in many applications, for example, food preservation.

Food degradation from various sources are recognized in the literature and individual chemicals are known which will inhibit one aspect or another of degradation derived from a single source, such as oxidation.

Antioxidants are widely used in food and biological systems. In food systems they are especially used to prevent oxidation of unsaturated fatty acids and in biological systems they protect cell components from oxidative stress.

Fatty bodies have a tendency to be oxidized, even at ambient temperature and this oxidation (or rancidness) makes them acquire new properties, principally of taste or smell, which are generally considered as undesirable when these fatty bodies are incorporated, for example, in food compositions or in cosmetic compositions.

There are currently employed, in compositions containing fatty bodies or materials, protective agents which, in fact, play the role of an anti-oxidant.

Among known anti-oxidants, ascorbic acid is currently used which acts principally by direct absorption of oxygen. However, ascorbic acid is only very slightly soluble in fatty bodies and it is consequently difficult to use in order to protect the fatty material against oxidation. Moreover, although ascorbic acid may inhibit enzymatic browning it promotes non-enzymatic browning, and therefore may not be used in many applications.

In order to solubilise the ascorbic acid molecule in fatty materials, it has been proposed to use various ascorbyl esters such as, for example, ascorbyl stearate, palmitate or laurate; see for example, the article of C. F. Bourgeois, *"Revue Francaise des Corps* *Gras",* No. 9, pages 353-356 (September 1981).

It is also known, apart from their own anti-oxidant properties, that ascorbic derivatives have the additional property of improving the activity of anti-oxidant agents such as tocopherols or cafeic acid and its esters, by favoring the regeneration of these anti-oxidant agents; see for example H. S. Olcott, *"Oil Soap*", 18, (1941), 77 and US-A-2,462,663.

Various improvements of these binary anti-oxidant agents, of the ascorbic derivatives + tocopherols or ascorbic derivatives + cafeic derivatives types have been proposed, by providing for the addition of a third constituent which again improves anti-oxidant effects. Among the third constituents of these ternary systems, there can be mentioned, principally, p-aminobenzoic acid (US-A-2,462,633), phospholipids (R. W. Riemenschneider *et al*., *"Oil Soap"* 1941, 47) and amines (Klaui, *"The Functional (Technical) Uses of Vitamins"*, ed. by M. Stein, University of Nottingham Seminar Vitamins, London, England, 1971, page 110).

It is also known that sulfiting agents including sulfur dioxide, sodium sulfite, sodium and potassium bisulfite and sodium and potassium metabisulfite act as anti-oxidants and possess the ability to preserve vegetable food products. Sulfites have also been employed as preservatives in prepared foods such as flavored beverages, syrup concentrates, wine and vinegar as well as in the processing of sugar, corn starch and shrimp. However, because of the recent increase in reported allergic reactions to these compounds, their use has fallen into disfavor. Regulatory actions involving the use of sulfites have been initiated and the former status of "generally recognized as safe" GRAS use of sulfites on raw foods and vegetables has been withdrawn by the U.S. Government Food and Drug Administration. Further labeling requirements have been imposed by the Food and Drug Administration on packaged food containing sulfites which have been added directly or indirectly.

Synthetic anti-oxidants for foodstuffs are known, such as dibutylhydroxytoluene (BHT) and butylhydroxyanisole (BHA). These compounds are, however, disadvantageous in that the amounts added to foodstuffs should be strictly controlled. For example, the maximum permissible content of BHT or BHA in fats and oils or in butter under the Japanese safety regulations must not exceed 0.02%, such limitation bringing about an insufficient anti-oxidative effect in some cases.

Besides the above named anti-oxidants for foodstuffs, several compounds have been proposed, for example alpha/omega-bis(2,5-dihydroxyphenyl)alkanes are disclosed in Japanese Patent Publication No. 42-6973, and hexahydrocurcumin or octahydrocurcumin are disclosed in Japanese Patent Publication No. 48-39930. The compounds, however, have drawbacks in their synthesis and effectiveness. Generally, anti-oxidants originating in natural products are preferred to synthetic anti-oxidants in food additives from the standpoint of safety and taste.

US-A-4195101 proposes use as an anti-oxidant of 2',6'-dihydroxy-9-(2,5-dihydroxyphenyl)octylphenone. It is taught that this compound serves as an anti-oxidant in foodstuffs, such as lard or the like, exhibiting higher anti-oxidative activities than the conventional anti-oxidant BHA. US-A-4195101 discloses the preparation of the compound by extraction and separation of mace, or Myristica fragrans Hautt, (a known spice) with petroleum ether, diethylether, n-hexane and carbon tetrachloride, followed by column chromatographic separation.

In a first aspect the present invention provides a derivatised anhydrofructose comprising a hydrophobic group linked (directly or indirectly) to a C of an anhydrofructose moiety.

The derivatised anhydrofructose may optionally be in admixture with any suitable carrier or diluent.

Thus, in a second aspect the present invention provides an antioxidant composition ) comprising the derivatised anhydrofructose comprising a hydrophobic group linked (directly or indirectly) to a C of an anhydrofructose moiety, optionally in admixture with any suitable carrier or diluent.

We have recognised that the compounds of the present invention may act as an antioxidant.

In a third aspect the present invention provides use of a derivatised anhydrofructose comprising a hydrophobic group linked (directly or indirectly) to a C of an anhydrofructose moiety, as an antioxidant.

We have recognised that the compounds of the present invention may act as an emulsifier.

In a fourth aspect the present invention provides use of a derivatised anhydrofructose comprising a hydrophobic group linked (directly or indirectly) to a C of an anhydrofructose moiety, as an emulsifier.

We have recognised that the compounds of the present invention may act as an antioxidant and as an emulsifier.

In a fifth aspect the present invention provides use of a derivatised anhydrofructose comprising a hydrophobic group linked (directly or indirectly) to a C of an anhydrofructose moiety, as an antioxidant and as an emulsifier..

Preferably, the hydrophobic group is attached indirectly to a C of an anhydrofructose moiety.

Preferably, the hydrophobic group is attached to the C₆ of the anhydrofructose moiety.

Preferably, the hydrophobic group is attached to C₆ of the anhydrofructose moiety *via* an ester group.

Preferably, the hydrophobic group is a fatty acid.

Preferably, the derivatised anhydrofructose is prepared by chemically derivatising anhydrofructose.

Preferably, the anhydrofructose is prepared by enzymatically derivatising anhydrofructose.

In a sixth aspect the present invention provides a food product or a composition for use in the manufacture of a food product comprising a derivatised anhydrofructose in accordance with the present invention.

As described previously antioxidants are widely used in food and biological systems. In food systems they are especially used to prevent oxidation of unsaturated fatty acids and in biological systems they protect cell components from oxidative stress. Fatty bodies have a tendency to be oxidized, even at ambient temperature and this oxidation (or rancidness) makes them acquire new properties, principally of taste or smell, which are generally considered as undesirable when these fatty bodies are incorporated, for example, in food compositions or in cosmetic compositions.

Although anti-oxidants may be provided they may not fully exhibit their anti-oxidant activities in respect of a lipid. This is particularly problematic if the lipid is present in a lipophilic phase of a lipid/water mixture.

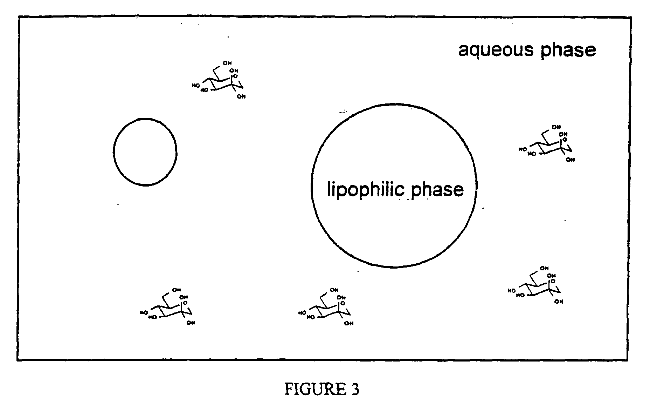

The present invention provides an antioxidant which may more fully exhibit its anti-oxidant activity in respect of a lipid. As can be seen from FIGURE 3 when a compound such as 1,5-anhydro-D-fructose or ascorbic acid, is in a lipid/water suspension, the 1,5-anhydro-D-fructose is only present in the aqueous phase. To act as an antioxidant in respect of the lipophilic phase the 1,5-anhydro-D-fructose should be in contact with/or proximity to the lipophilic phase. Thus because the anhydrofructose is only or is primarily present in the aqueous phase it does not efficiently protect the lipophilic phase from oxidation.

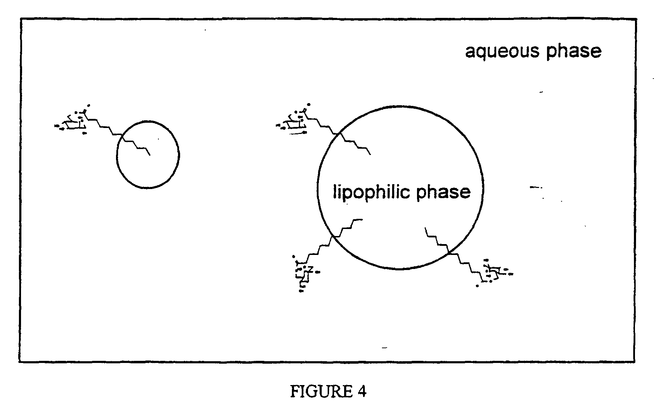

In contrast, a derivatised anhydrofructose comprising a hydrophobic group in accordance with the present invention, such as 6-*O*-acyl-1,5-anhydro-D-fructose, may efficiently protect the lipophilic phase from oxidation. FIGURE 4 illustrates that in a compound in accordance with the present invention, namely 6-*O*-acyl-1,5-anhydro-D-fructose, the hydrophobic group is in contact with the lipophilic phase of the suspension. The anhydrofructose may then exhibit an anti-oxidant effect on the lipophilic phase.

Preferably the compound of the present invention is 6-*O*-acyl-1,5-anhydro-D-fructose.

1,5-anhydro-D-fructose, which has the formula 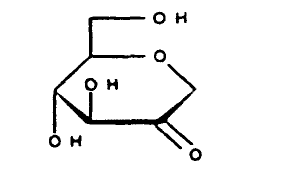 may be chemically synthesised from glucose (6 steps, 21% overall yield) see *Tetrahedron Lett*. 1980, **21,** 1429-1432; 1,5-anhydro-D-glucitol (4 steps, 30% overall yield) see *Japanese Pat. Appl.* 61-213733 (1986). It may also be synthesised enzymatically from 1,5-anhydro-D-glucitol see *J. Biochem.* 1986, **99,** 607-613 (analytical) and *Chem. Eur. J.* **1998,** 4(12), 2442-2455 (preparative scale), or from α-1,4-glucans (40-50 % yield) see *Phytochemistry,* 1988, **27**(11), 3401-3403.

In aqueous solution 1,5-Anhydro-D-fructose has the structure shown below

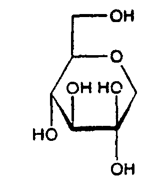

This structures represent 1,5-anhydro-D-fructose hydrate. 1,5-anhydro-D-fructose hydrate is disclosed in *Biotechnol. Appl. Biochem.,* 1993, **18**, 275-283.

In non-aqueous solution 1,5-Anhydro-D-fivctose has the structure

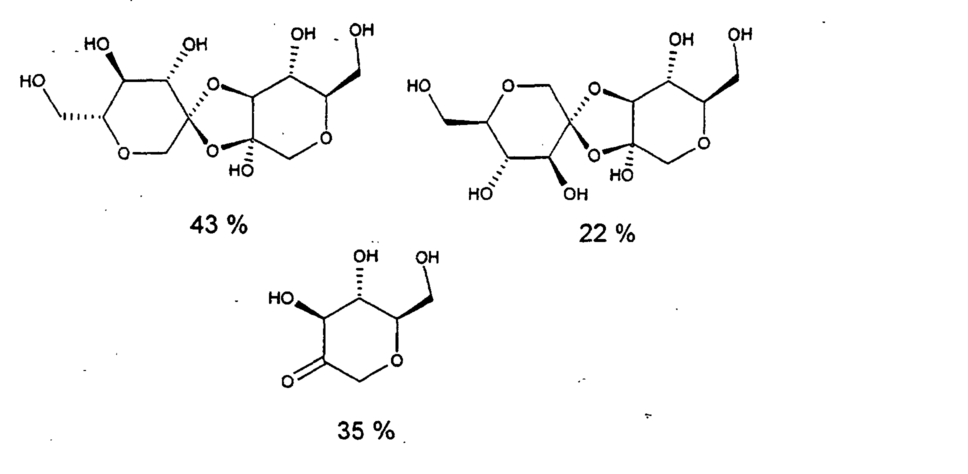

These structures may be determined by 13C NMR and ¹H NMR *J. Carbohydrate Chemistry,* 1998, **17**(7), 1027-1035.

*J. Carbohydrate Chemistry*, 1998, **17**(7), 1027-1035 determined that the composition of anhydrous 1,5-anhydro-D-fructose is as follows Monomeric ketone 35%:Dimer type I 43%: Dimer type II 22%.

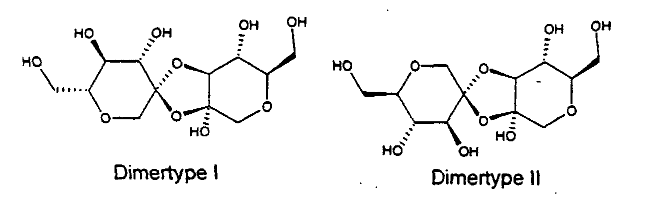

### Simple Reactions

1,5-anhydro-D-fructose may be oxidised as follows

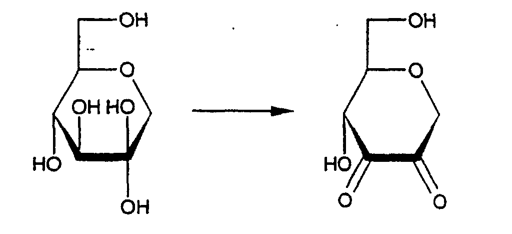

The oxidation may be performed in weakly alkaline aqueous solution of 1,5-anhydro-D-fructose + O₂. Oxidation of the -OH at the 3 position to 1,5-anhydro-D-erythro-hex-2,3-diulose in 75% yield after 1 week was observed.

The structure of 6-*O*-acyl-1,5-anhydro-D-fructose is represented below

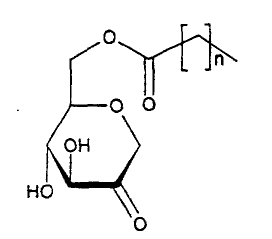

6-*O*-acyl-1,5-anhydro-D-fructose is particularly preferred as a compound in accordance with the present invention as it is probably readily degradable and is therefore considered to environmental friendly *- JAOCS* 1996, **73**(7), 929-933

The preparation of 6-*O*-acyl-1,5-anhydro-D-fructose may be addressed by a chemical approach or by an enzymatic approach

The chemical approach may comprise the following reaction to synthesise C₁₂ esters of anhydrofructose

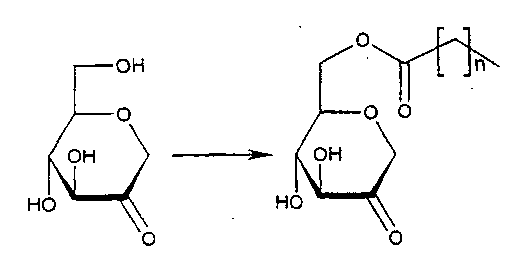

The reaction is carried out with lauroyl chloride and pyridine. The acylation sites were assigned through derivatisation of NH₂OR followed by separation and NMR of the products. The products were found to be
50% 6-*O*-acyl-1,5-anhydro-D-fructose
11% 3-*O*-acyl-1,5-anhydro-D-fructose

Preferably the compound in accordance with the present invention is prepared from 1,5-anhydro-D-fructose prepared in accordance with GB-A-2296717. In other words, preferably the 1,5-anhydro-D-fructose is prepared by a method comprising treating an α-1,4-glucan with the enzyme α-1,4-glucan lyase characterised in that enzyme is used in substantially pure form. GB-A-2296717 discloses use of 1,5-anhydro-D-fructose as a water-soluble anti-oxidant.

The enzymatic approach to prepare 6-*O*-acyl-1,5-anhydro-D-fructose may comprise the use of lipases and proteases. In aqueous solution lipases and proteases cleave ester linkages. Lipases are sugar specific and proteases fatty acid specific. However, *Synthesis* 1990, 112-115 discloses that lipases and proteases in non-aqueous solution offer a reversal of activity, and form ester bonds. Thus lipases and proteases in non-aqueous solution may be used in the preparation of a compound in accordance with the present invention.

In accordance with *J*. *Chem*. *Soc. Perkin Trans. I*, 1995, 2203-2222 lipases were screened to identify suitable lipases for the preparation of compounds in accordance with the present invention. Screening with pyridine identified *Candida antarctica, Pseudomonas cepacia, Pseudomonas fluorescens*, and hog pancreas. Screening with ^{t}BuOH:pyridine 2:1 identified *Candida antarctica, Candida cylindracea*, *Pseudomonas cepacia*, *Pseudomonas fluorescens*, hog pancreas.

Thus preferably the compound in accordance with the present invention is prepared with a lipase obtained from *Candida antarctica, Pseudomonas cepacia, Pseudomonas fluorescens*, hog pancreas, or *Candida cylindracea*.

Preferably the compound in accordance with the present invention is prepared with lipase from *Candida antarctica. Candida antarctica* may be obtained from Novo Nodisk A/S, Denmark under the name Novozym 435.

The enzymatic approach was demonstrated by the enzymatic acylation of 1,5-anhydro-D-fructose with lauric acid to form 6-*O*-acyl-1,5-anhydro-D-fructose.

| Lauric acid (mol/mol) | Solvent | 3 Å molecular sieve. (w/w) | Temperature (°C) | Reactiontime (h) | Conversion |
|---|---|---|---|---|---|
| 1 | tert-BuOH | - | 40 | 24 | 21 % |
| 1 | tert-BuOH | 1 (powd.) | 40 | 24 | 56 % |
| 1 | tert-BuOH | 1 (powd.) | 40 | 72 | 62 % |
| 1 | acetone | 1 (powd.) | 20 | 24 | 55 % |
| 1 | tert-BuOH | 5 | 45 | 24 | 56 % |
| 1 | tert-BuOH | 10 | 45 | 24 | 61 % |
| 1 | tert-BuOH | 20 | 45 | 24 | 66 % |
| 3 | tert-BuOH | 20 | 45 | 24 | 73 % |
| 3 | tert-BuOH | 20 (powd.) | 45 | 24 | 78 % |
| 3 | tert-BuOH | 20 (powd.) | 45 | 48 | quantitative |
| 3 | acetone | 20 | 20 | 72 | quantitative |

The chemical approach may comprise the quantitative conversion with lauric, palmitic and stearic acid of 1,5-anhydro-D-fructose to 6-O-acyl-1,5-anhydro-D-fructose as follows

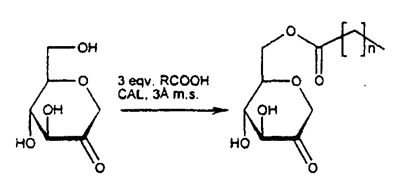

The reaction forms a composition comprising monomer ketone/dimer type 1/dimer type 2 - 1:3:1. The mixture may be purified by chromatography on silica to give approximately 70% yield.

The invention will now be described, by way of example only, with reference to the accompanying drawings in which:-
Figure 1 shows scheme 1

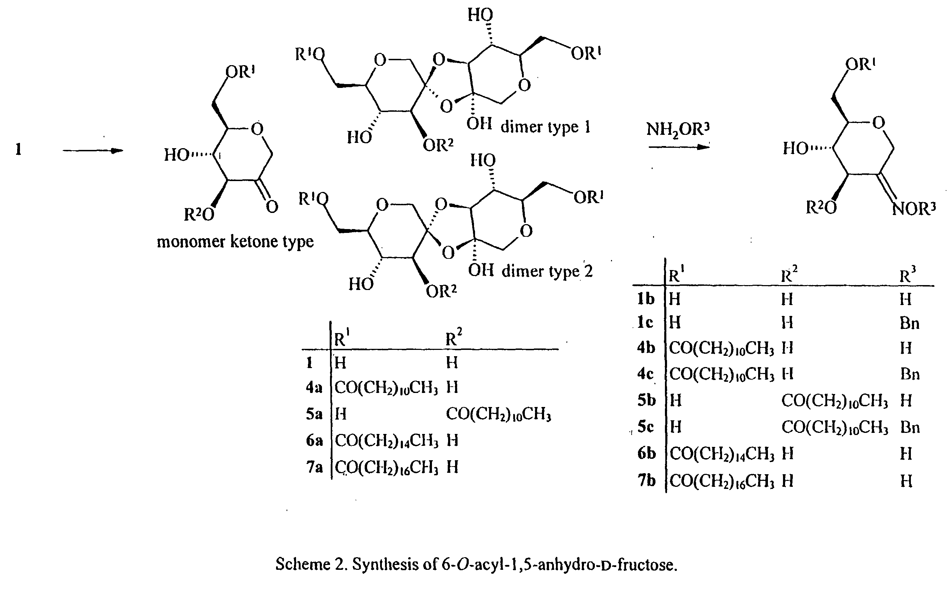

Figure 2 shows scheme 2
Figure 3 shows a composition not in accordance with the present invention
Figure 4 shows a composition in accordance with the present invention

### EXAMPLES

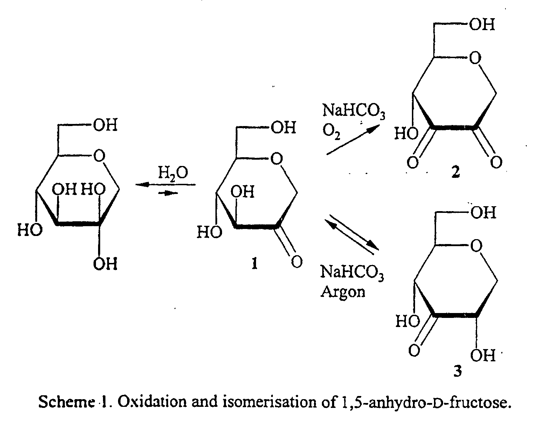

1,5-Anhydro-D-fructose (1) can tautomerise into an enediol (Figure 1) and might therefore be a potentially new antioxidant (similar to L-ascorbic acid [1]). Antioxidants are important both in food and biological systems: In foods they are especially used to prevent oxidation of unsaturated fatty acids, while in biological systems they protect cell components from oxidative stress. Since 1,5-anhydro-D-fructose is easily produced as a degradation product from α-1,4-glucans [2-4], it is an attractive alternative to already existing antioxidants.

### Enolisation of 1,5-anhydro-D-fructose.

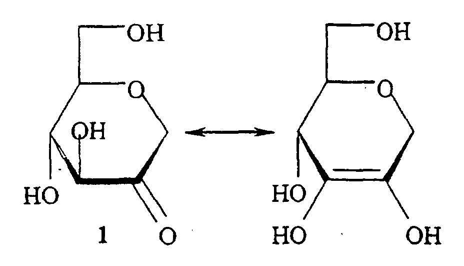

Food systems typically consist of a heterogeneous suspension of water and oil. Due to its hydrophilicity, 1,5-anhydro-D-fructose (**1**) stays in the aqueous phase, and is thus not efficient for protecting the lipid phase from oxidation. Since it is known that fatty acid esters of carbohydrates have amphiphilic properties [5] and reside at the interface between the aqueous and the lipid phase, these compounds should protect the lipid phase better than **1** against oxidation. This class of compounds, non-ionic surfactants based on sugars, have many other important uses besides food applications, e.g. extraction of protein from membranes and solubilisation of hydrophobic molecules. They have also shown anti-HIV and anti-*Aspergillus fumigatus* activity [6].

Furthermore, fatty acid esters of carbohydrates are biodegradable, harmless and inexpensively made from renewable sources [7].

### 2. Results and discussion

Use of 1,5-anhydro-D-fructose (**1**) as an antioxidant inevitably means oxidation of **1**, hence the identification of oxidation products are important for the use of **1** in food. Oxidation of carbohydrates can be accomplished in a number of ways, e.g. treatment with H₂O₂ or O₂ [8,9]. The oxidation of **1** with molecular oxygen is especially important in order to evaluate **1** as an antioxidant in food.

Stirring an aqueous solution of **1** in an atmosphere of oxygen for one week did not cause any oxidation, but when the pH was increased to 8.5, **1** was readily oxidised at C-3 to give 1,5-anhydro-D-*erythro*-hexo-2,3-diulose (2) (50% conversion after 1 day and 75% after 6 days). The latter compound has also been reported as an alkaline degradation product from 2- and 3-oxo-glucopyranosides [10,11]. Reduction of the α-diketone **2** with NaBH₄ afforded the four possible stereoisomeric 1,5-anhydro-D-hexitols. Repeating the experiment in the absence of oxygen, a mixture of 1 and an isomeric compound (25%) was observed by ¹³C NMR spectroscopy. Reduction of the reaction mixture gave three of the above stereoisomeric 1,5-anhydro-D-hexitols. When the experiment was performed in D₂O the H-3 proton of **1** was replaced by deuterium within 24 h. The formed isomer likewise had one incorporated deuterium, showing the enolisation between C-2 and C-3. Based on these findings and the analogy with the alkaline degradation of 2-oxo-glucopyranosides [11], the structure of the isomer was assigned as 1,5-anhydro-D-*ribo*-hex-3-ulose (**3**). In contrast to the alkaline degradation of 1,5-anhydro-D-fructose (**1**) in stronger aqueous base (pH 13-14), no elimination and benzilic acid rearrangements took place to give isosaccharinic acids [12].

### Scheme 1. Oxidation of 1,5-anhydro-D-fructose.

For obtaining fatty acid esters of **1** as possible antioxidative compounds, it would be important to acylate the primary hydroxyl group selectively. Monoacylation of 1,5-anhydro-D-fructose (**1**) could in principle be accomplished at OH-3, OH-4 or OH-6, but to avoid tedious protection and deprotection steps of **1** as well as to preserve the antioxidative activity [13,14], it was desirable to directly acylate the primary hydroxyl group. The acylation reaction of **1** was complicated by the dimeric structure of 1,5-anhydro-D-fructose [15,16]. An incomplete regioselective acylation of the primary hydroxyl group would afford seven products. To ease the monitoring of the reaction, the reaction mixture was derivatised with hydroxylamine which quantitatively converted the products to the corresponding monomeric oximes.

1,5-Anhydro-D-fructose (**1**) was regioselectively acylated with lauroyl chloride in pyridine at low temperature. After derivatisation with hydroxylamine and separation of the products by chromatography, 6-*O*-lauroyl-1,5-anhydro-D-fructose oxime (**4b**) (50%) and 3-*O*-lauroyl-1,5-anhydro-D-fructose oxime (**5b**) (11%) were isolated. Alternatively the carbonyl group was protected with *O*-benzylhydroxylamine to give the corresponding *O*-benzyloximes **4c** and **5c.** By the relative downfield shift of the hydrogens on the acylated carbon, the position of the acyl group was assigned by ¹H NMR spectroscopy. For comparison, methyl α-D-glucopyranoside can be regioselectively acylated at the primary hydroxyl group with lauroyl chloride in pyridine at low temperature in 27% yield [17]. The improved regioselectivity in the acylation of **1** was probably due to steric hindrance in the dimeric forms of 1,5-anhydro-D-fructose (1). Employing activated esters such as *N*-lauroylthiazolidine-2-thiones [18] or Mitsunobu conditions [19] did not improve the regioselectivity, but caused some degradation of 1,5-anhydro-D-fructose (1). In these procedures it was necessary to add bases such as NaH, DMAP or PPh₃, which probably caused alkaline degradation. The only product isolated from the regioselective acylation of **1** with *N*-lauroylthiazolidine-2-thiones followed by derivatisation was the 3-*O*-lauroyl-1,5-anhydro-D-fructose oxime (**5b**). 3-*O*-Acylation therefore stabilises **5a** against degradation, as known for similar derivatives of L-ascorbic acid [13,14].

### Scheme 2. Regioselective acylation.

An attractive alternative to the chemical procedures is the use of lipases and proteases for the regioselective acylation of the primary hydroxyl group of unprotected sugars with fatty acids [20-22]. The enzymatic acylation of sugars with fatty acids can be accomplished in organic solvents [23], in a minimum of organic solvent (adjuvant technique) [24] or solvent-free [25,26]. Recently supercritical CO₂ also has been used [27].

Initially, commercial lipases from nine different organisms were screened for the regioselective acylation of 1,5-anhydro-D-fructose (1). In pyridine the lipases from *Candida antarctica, Pseudomonas cepacia, Pseudomonas fluorescens* and hog pancreas were active (Screening 1 in Table 1). Since polar solvents such as pyridine can inhibit the lipase activity, the screening was also performed in a mixture of *tert*-BuOH and pyridine (2:1 ratio). It was found that the same lipases were active together with the lipase from *Candida cylindracea*. Since the lipase from *Candida antarctica* showed a good activity compared to the others in both screenings, it was chosen for further studies.

### Table 1. Screening 1 and 2.

**Table 1**

| Screening of lipases- for the enzymatic regioselective acylation of 1,5-anhydro-D-fructose (**1**).^{a} | | |
|---|---|---|
| Lipase | Screening 1 | Screening 2 |
| *Aspergillus niger* | - | - |
| *Candida antarctica* | + | + |
| *Candida cylindracea* | - | + |
| *Mucor miehei* | *-* | - |
| *Pseudomonas cepacia* | + | + |
| *Pseudomonas fluorescens* | + | + |
| *Rhizopus arrhizus* | - | - |
| *Rhizopus niveus* | - | - |
| Hog pancreas | + | + |

| | | |
|---|---|---|
| ^{a} "+" For activity and "-" for no activity | | |

The enzymatic acylation of 1,5-anhydro-D-fructose (1) with lauric acid to 1,5-anhydro-6-*O*-lauroyl-D-fructose (**4a**) was studied in different solvents by varying the sugar:fatty acid ratio, the amount of drying agents (molecular sieves), temperature and the reaction time (Table 2). Simply stirring equimolar amounts of **1,** lauric acid and lipase in *tert*-BuOH at 40 °C for 24 h afforded 21% conversion. The reaction is reversible, but several factors can shift the equilibrium towards complete conversion: product crystallisation, removal of water and the ratio of sugar:fatty acid. Since the acylation products from 1,5-anhydro-D-fructose (**1**) did not crystallise from the reaction mixture, the removal of water and the ratio **1**:fatty acid were investigated. Addition of an excess of drying agent (3 Å molecular sieves) increased the conversion to 66% after 24 h. It is noteworthy that a large excess of molecular sieves was necessary in order to optimise the enzymatic reaction - much more than the capacity (20% (w/w)) of the molecular sieves. Increasing the amount of fatty acid to 3 molar equivalents, together with an excess of molecular sieves, afforded 73% conversion, and by using powdered molecular sieves, 78% conversion was obtained after 24 h. Extending the reaction time to 48 h afforded a quantitative conversion of **1** to the 6-*O*-lauroyl ester **4a**, as shown by ¹³C NMR. When the enzymatic acylation was carried out in refluxing *tert*-BuOH or simply in melted fatty acid at 70 °C and low pressure to remove water [25,26], several byproducts were formed, such as elimination and diacylation products.

### Table 2. Lipase-experiments.

**Table 2 -**

| Enzymatic acylation of 1,5-anhydro-D-fructose (**1**) with lauric acid.^{a} | | | | | |
|---|---|---|---|---|---|
| Lauric acid (mot/mol **1**) | Solvent | 3 Å molecular sieve. (w/w 1) | Temperature (°C) | Reactiontime (h) | Conversion |
| 1 | *tert*-BuOH | - | 40 | 24 | 21 % |
| 1 | *tert*-BuOH | 1 (powd.) | 40 | 24 | 56 % |
| 1 | *tert*-BuOH | 1 (powd.) | 40 | 72 | 62 % |
| 1 | acetone | 1 (powd.) | 20 | 24 | 55 % |
| 1 | *tert*-BuOH | 5 | 45 | 24 | 56 % |
| 1 | *tert*-BuOH | 10 | 45 | 24 | 61 % |
| 1 | *tert*-BuOH | 20 | 45 | 24 | 66 % |
| 3 | *tert*-BuOH | 20 | 45 | 24 | 73 % |
| 3 | *tert*-BuOH | 20 (powd.) | 45 | 24 | 78 % |
| 3 | *tert*-BuOH | 20 (powd.) | 45 | 48 | quantitative |
| 3 | acetone | 20 | 20 | 72 | quantitative |

| | | | | | |
|---|---|---|---|---|---|
| ^{a} A typical experiment: 1,5-anhydro-D-fructose (200 mg), lauric acid, Novozym 435 (200 mg), 3Å molecular sieves and solvent (10 mL) was stirred for the time and temperature indicated. The solids were filtered off and washed with pyridine. The filtrate was concentrated; pyridine (2 mL) and NH₂OH, HCl (200 mg) was added and stirred for 1 h, followed by ¹³C NMR analysis. | | | | | |

To further simplify the reaction, acetone was used as a solvent and the enzymatic acylation was performed at ambient temperature. Under these reaction conditions, **1** was converted in quantitative yield to the corresponding 6-*O*-acylated products **4a**, **6a** and **7a** in three to seven days (lauroyl, palmitoyl and steroyl esters of **1**) (Table 3).

### Table 3. Different fatty acids.

**Table 3**

| Enzymatic acylation of 1,5-anhydro-D-fructose (1) with different fatty acids.^{a} | | | | | |
|---|---|---|---|---|---|
| Fatty acid (3 mol/mol **1**) | Solvent | 3 Å m.s. (w/w **1**) | Temperature (in °C) | Reactiontime (in h) | Conversion^{b} |
| lauric acid | acetone | 20 | 21 | 72 | quantitative (67%) |
| palmitic acid | acetone | 20 | 21 | 72 | quantitative (68%) |
| stearic acid | acetone | 20 | 21 | 168 | quantitative (65%) |

| | | | | | |
|---|---|---|---|---|---|
| ^{a} 1,5-Anhydro-D-fructose (200 mg), fatty acid, Novozym 435 (200 mg), 3Å molecular sieves and solvent (10 mL) was magnetically stirred for the given time at the given temperature. The solids were filtered of and washed with pyridine. The filtrate was concentrated, added pyridine (2 mL) and NH₂OH, HCl (200 mg). Stirred for 1 h and the conversion was determined by ¹³C NMR. | | | | | |
| ^{b} The conversion shown in brackets are preparative yields of underivatised 6-*O*-acyl-1,5-anhydro-D-fructose after chromatography. | | | | | |

Like anhydrous 1,5-anhydro-D-fructose (**1**), the 6-*O*-acylated products **4a, 6a** and **7a** form dimeric ketals [15,16]. Thus the acylation products were present as mixtures of monomeric ketone, dimer type I and dimer type II (Scheme 2).

In conclusion, a promising enzymatic synthesis of 6-*O*-acylated derivatives of 1,5-anhydro-D-fructose has been achieved. These types of biodegradable fatty acid esters of 1,5-anhydro-D-fructose (**1**) have both antioxidative and emulsifying properties.

### Table 4. ¹³C NMR.

**Table 4**

| ¹³C NMR of isolated compounds in pyridine-*d*₅.^{a} | | | | | | |
|---|---|---|---|---|---|---|
| Compound | C-1 | C-2 | C-3 | C-4 | C-5 | C-6 |
| **1b** | 61.9 | 155.7 | 74.8 | 74.0 | 82.7 | 63.2 |
| **1c** | 62.2 | 157.8 | 74.4 | 73.5 | 82.8 | 63.1 |
| **4b** | 61.6 | 155.0 | 74.9 | 73.8 | 79.2 | 64.8 |
| **4c** | 61.9 | 157.1 | 74.4 | 73.4 | 79.2 | 64.6 |
| **5b** | 62.1 | 151.3 | 75.5 | 70.4 | 82.9 | 62.8 |
| **5c** | 62.1 | 152.5 | 75.0 | 70.1 | 82.8 | 62.4 |
| **6b** | 61.6 | 155.0 | 74.9 | 73.8 | 79.2 | 64.8 |
| **7b** | 61.6 | 155.0 | 74.9 | 73.8 | 79.2 | 64.8 |

| | | | | | | |
|---|---|---|---|---|---|---|
| ^{a} δ-Values (ppm) for **1b, 1c, 4b**, **4c**, **5b** (125 MHz), **5c**, **6b**, **7b** (62.9 MHz); signals were assigned by C-H correlated NMR; solventpeaks used as reference (δ 149.9, 135.5 and 123.5 ppm). | | | | | | |

### Table 5. ¹H NMR.

| ¹H NMR of isolated compound in pyridine-*d*₅.^{a} | | | | | | | |
|---|---|---|---|---|---|---|---|
| Compound | H-1a | H-1b | H-3 | H-4 | H-5 | H-6a | H-6b |
| **1b** | 4.27 (d) *J*_{1a,1b} 14.5 | 5.68 (d) | 4.89 (d) *J*_{3,4} 7.5 | 4.38 (broad t) *J*_{4,5} 8.5 | 3.99 (ddd) *J*_{5,6a} 6.0 *J*_{5,6b} 2.5 | 4.31 (dd) *J*_{6a,6b} 11.5 | 4.49 (dd) |
| **1c** | 4.21 (d) *J*_{1a,1b} 15.0 | 5.42 (d) | 4.83 (d) *J*_{3,4} 7.5 | 4.39 (dd) *J*_{4,5} 8.5 | 3.95 (ddd) *J*_{5,6a} 5.5 *J*_{5,6b} 2.5 | 4.29 (dd) *J*_{6a,6b} 12.0 | 4.45 (dd) |
| **4b** | 4.24 (d) *J*_{1a,1b} 14.5 | 5.68 (d) | 4.87 (d) *J*_{3,4} 8.0 | 4.22 (broad t) *J*_{4,5} 8.5 | 4.06 (ddd) *J*_{5,6a} 6.5 *J*_{5,6b} 2.0 | 4.77 (dd) *J*_{6a,6b} 12.0 | 4.97 (dd) |
| **4c** | 4.17 (d) *J*_{1a,1b} 14.5 | 5.40 (d) | 4.80 (d) *J*_{3,4} 7.5 | 4.21 (broad t) *J*_{4,5} 8.5 | 4.02 (ddd) *J*_{5,6a} 6.5 *J*_{5,6b} 2.5 | 4.75 (dd) *J*_{6a,6b} 11.5 | 4.91 (dd) |
| **5b** | 4.24 (d) *J*_{1a,1b} 14.5 | 5.63 (d) | 6.16 (d) *J*_{3,4} 7.5 | 4.53 (broad t) *J*_{4,5} 8.0 | 3.95 (ddd) *J*_{5,6a} 5.5 *J*_{5,6b} 2.5 | 4.29 (dd) *J*_{6a,6b} 12.0 | 4.41 (dd) |
| **5c** | 4.08 (d) *J*_{1a,1b} 15.0 | 5.38 (d) | 6.10 (d) *J*_{3,4} 7.0 | 4.52 (broad t) *J*_{4,5} 8.5 | 3.92 (ddd) *J*_{5,6a} 5.0 *J*_{5,6b} 2.5 | 4.28 (dd) *J*_{6a,6b} 12.0 | 4.39 (dd) |
| **6b** | 4.23 (d) *J*_{1a,1b} 14.5 | 5.70 (d) | 4.87 (d) *J*_{3,4} 8.0 | 4.23 (broad t) *J*_{4,5} 8.0 | 4.07 (ddd) *J*_{5,6a} 6.5 *J*_{5,6b} 2.0 | 4.77 (dd) *J*_{6a,6b} 12.0 | 4.98 (dd) |
| **7b** | 4.21 (d) *J*_{1a,1b} 14.5 | 5.68 (d) | 4.86 (d) *J*_{3,4} 8.0 | 4.21 (broad t) *J*_{4,5} 8.5 | 4.05 (ddd) *J*_{5,6a} 6.5 | 4.76 (dd) *J*_{6a,6b} 12.0 | 4.97 (dd) |
| | | | | | *J*_{5,6b} 2.0 | | |

| | | | | | | | |
|---|---|---|---|---|---|---|---|
| ^{a} δ-Values (ppm) and coupling constants (*J*, Hz) for **1b, 1c, 4b**, **4c**, **5b** (500 MHz), **5c, 6b, 7b** (250 MHz); signals were assigned by 2D-COSY NMR; solventpeaks was used as reference (δ 8.71, 7.55 and 7.19 ppm). | | | | | | | |

### 3. Experimental

*General methods*.―1,5-Anhydro-D-fructose (**1**) was freeze-dried from an aqueous solution and residual water coevaporated with toluene three times before use. Molecular sieves were activated with a heatgun in a flow of argon. *tert*-BuOH and pyridine were distilled from CaH₂ onto 3 Å molecular sieves, acetone was dried over MgSO₄ and lauroyl chloride was distilled prior to use. The enzymes used in the screenings were dried *in vacuo* over "Blue Gel" for 2 days. The reactions were performed in an argon atmosphere, unless otherwise stated. ¹H NMR and ¹³C NMR spectra were recorded on Bruker instruments AC 250 (ambient temperature) or AM 500 (300 K). For ¹H and ¹³C NMR spectra in pyridine the solvent peak was used as a reference. For ¹³C NMR in D₂O, acetone (δ = 30.89 ppm) was used as internal reference. Melting points are uncorrected. Optical rotations were measured on a Perkin-Elmer 241 polarimeter. Microanalyses were carried out by The Microanalytical Department, University of Copenhagen and Institut für Physikalische Chemie, University of Wien. TLC was performed on precoated kieselgel 60 F₂₅₄ and spots were visualised by spraying with a mixture of 1.5% (w/w) (NH₄)₆Mo₇O₂₄·4H₂O, 1% (w/w) Ce(SO₄)₂·4H₂O and 10% (v/v) H₂SO₄, followed by heating. Flash chromatography was performed on silica gel 60 (Grace AB Amicon, 35-70 µm). HPLC was performed on a Waters 8NVC186 reverse phase column, with an evaporative light scattering detector (ELSD). Evaporations were performed *in vacuo* at temperatures below 45 °C

*Oxidation of 1,5-anhydro-*D*-fructose* (**1**).―1,5-Anhydro-D-fructose (**1**) (464 mg, 2.9 mmol) was dissolved in H₂O (5 mL) and left for 24 h. NaHCO₃ (257 mg, 3.0 mmol) was added, resulting in pH 8.5, and the reaction mixture was stirred under an atmosphere of O₂. The reaction was followed by ¹³C NMR. After 24 h: 50% conversion to 1,5-anhydro-D-*erythro*-hexo-2,3-diulose (**2**) and after 6 days: 75% conversion. A sample was reduced with NaBH₄ to the four possible 1,5-anhydro-D-hexitols, as seen by ¹³C NMR.

1,5-Anhydro-D-*erythro*-hexo-2,3-diulose (**2**) in D₂O (62.9 MHz, signals assigned by DEPT): δ 179.1 and 178.5 (C-2 and C-3), 83.5 (C-5), 70.5 (C-4), 69.5 (C-1) and 61.6 (C-6).

*1,5-Anhydro*-D-*fructose* (**1**) *in weakly alkaline aqueous solution*.*―*1,5-Anhydro-D-fructose (**1**) (639 mg, 3.9 mmol) was dissolved in H₂O (10 mL) and left for 24 h. NaHCO₃ (333 mg, 4.0 mmol) was added, resulting in pH 8.5, and the reaction was followed by ¹³C NMR. After 24 h an equilibrium was reached between **1** (75%) and an isomer: 1,5-anhydro-D-*ribo*-hex-3-ulose (**3**) (25%). A sample was reduced with NaBH₄ to three of the above 1,5-anhydro-D-hexitols, as seen by ¹³C NMR.

The alkaline rearrangement of 1,5-anhydro-D-fructose (**1**) was repeated in D₂O, where H-3 of **1** and H-2 of 3 were replaced by deuterium within 24 h, as seen by ¹³C NMR.

1,5-Anhydro-D-*ribo*-hex-3-ulose (**3**) in D₂O (62.9 MHz, signals assigned by DEPT and from the alkaline degradation of **1** in D₂O): δ 206.2 (C-3), 75.8 (C-5), 73.1 (C-2), 68.4 (C-1), 66.8 (C-4) and 62.1 (C-6).

*1,5-Anhydro-6-*O-*lauroyl*-D-*fructose oxime* (**4b**) and *1,5-anhydro-3*-O-*lauroyl-D-fructose oxime* (**5b**).―1,5-Anhydro-D-fructose (**1**) (1.0 g, 6.3 mmol) was dissolved in pyridine (30 mL) and the solution was cooled to 0 °C. Lauroyl chloride (1.50 mL, 6.3 mmol) was added dropwise and the reaction mixture was stirred for 1 h at 0 °C and 3 h at ambient temperature. Then MeOH (1 mL) was added and after 1 h NH₂OH, HCl (660 mg, 9.5 mmol) were added and the mixture was stirred for 24 h. The reaction mixture was concentrated and the products were separated by chromatography (64 g silica, eluted with hexane:EtOAc 3:1 to 1:2) to give 1,5-anhydro-6-*O*-lauroyl-D-fructose oxime (**4b**) (1.1 g, 50%), mp 89-96 °C, and 1,5-anhydro-3-*O*-lauroyl-D-fructose oxime as a syrup (**5b**) (250 mg, 11%). Analytical samples of **4b** and **5b** were prepared by chromatography.

1,5-Anhydro-6-*O*-lauroyl-D-fructose oxime (**4b**): mp 90-101 °C; [α]_{D} -13.5° (*c* 1.1 MeOH). Anal. Calcd for C₁₈H₃₃NO₆: C, 60.14; H, 9.25; N, 3.90. Found: C, 60.35; H, 9.18; N, 4.10).

1,5-Anhydro-3-*O*-lauroyl-D-fructose oxime (**5b**): [α]_{D} -45.7° (*c* 1.1 MeOH). HRMS calcd for C₁₈H₃₃NO₆: 359.2309 (M); found: 359.2297.

*1,5-Anhydro-6*-O-*lauroyl*-D-*fructose* O-*benzyloxime* (**4c**) and *1,5-anhydro-3*-O-*lauroyl*-D-*fructose* O-*benzyloxime* (**5c**).―Using the same procedure as above, 1,5-anhydro-D-fructose (1) (227 mg, 1.4 mmol) was acylated with lauroyl chloride (0.332 mL, 1.4 mmol) in pyridine (10 mL) followed by addition of BnONH₂, HCl (236 mg, 1.5 mmol). After stirring for 24 h the mixture was concentrated. The products were separated by chromatography (20 g silica, eluted with hexane:EtOAc 3:1 to 1:1) to give 1,5-anhydro-6-*O*-lauroyl-D-fructose *O*-benzyloxime (**4c**) (287 mg, 46%) and 1,5-anhydro-3-*O*-lauroyl-D-fructose *O*-benzyloxime (**5c**) (43 mg, 7%). Analytical samples of **4c** and **5c** were prepared by chromatography.

1,5-Anhydro-6-*O*-lauroyl-D-fructose *O*-benzyloxime (**4c**): mp 45-50 °C; [α]_{D} -9.6° (*c* 1.0 MeOH). HRMS calcd for C₂₅H₃₉NO₆: 450.2856 (M+H⁺); found: 450.2854.

1,5-Anhydro-3-*O*-lauroyl-D-fructose *O*-benzyloxime (**5c**): mp 48-51 °C; [α]_{D} -51.7° (*c* 1.3 MeOH). HRMS calcd for C₂₅H₃₉NO₆: 450.2856 (M+H⁺); found: 450.2845.

*Screening of lipases for the regioselective esterification of 1,5-anhydro-D-fructose* (**1**).―Screening 1. A solution of 1,5-anhydro-D-fructose (**1**) (308 mg, 1.9 mmol), lauroyl *O*-acetoxime (480 mg, 1.9 mmol) and pyridine (13 mL) was prepared. 1 mL of this solution was added to approximately 10 mg of lipase in an Eppendorf tube, and the mixture was shaken (1000 rpm) at 30 °C for 4 days and centrifuged (14000 rpm, 5 min.). A sample (0.5 mL) of the supernatant was added to 0.5 M NH₂OH (pyridine) (0.5 mL) and left for 24 h. The solution was analysed by HPLC.

Screening 2. The enzymatic reactions were performed in *tert*-BuOH:pyridine (2:1) using the same procedure as screening 1.

### Enzymatic regioselective acylation of 1,5-anhydro-D-fructose (1).

*1,5-Anhydro-6*-O-*lauroyl*-D-*fructose* (**4a**).―1,5-Anhydro-D-fructose (**1**) (1.1 g, 6.7 mmol), lauric acid (4.0 g, 20.2 mmol), Novozym 435 (1.1 g) and 3 Å molecular sieves (21.8 g) were suspended in acetone (95 mL) and stirred for 72 h. Pyridine (30 mL) was added to the reaction mixture and the solids were filtered off and washed with pyridine (2×30 mL). The filtrate was concentrated *in vacuo* to a syrup (6.3 g). To a sample (377 mg) was added pyridine (1.5 mL) and NH₂OH, HCl (116 mg). The solution was stirred for 1 h and was shown by ¹³C NMR to consist of only 1,5-anhydro-6-*O*-lauroyl-D-fructose oxime (**4b**). The remaining syrup (5.9 g) was purified by chromatography (100 g silica, eluted with hexane:EtOAc:EtOH, 4:1:0 then 0:4:1) to afford 1,5-anhydro-6-*O*-lauroyl-D-fructose (**4a**) as an amorphous solid (1.5 g, 67%). This preparation was shown by ¹³C NMR [16] to consist of monomeric ketone (δ 82.6, C-5) (20%), dimer type I (δ 88.3, C-3') (60%) and dimer type II (δ 89.1, C-3') (20%). To a sample of this mixture (72 mg) was added NH₂OH, HCl (75 mg) and pyridine (1 mL). The solution was stirred for 1 h and was shown by ¹³C NMR to consist of only 1,5-anhydro-6-*O*-lauroyl-D-fructose oxime (**4b**).

*1,5-Anhydro-6*-O-*palmitoyl*-D-*fructose* (**6a**).―Using the same procedure as for **4a,** a mixture of 1,5-anhydro-D-fructose (**1**) (1.0 g, 6.3 mmol), palmitic acid (4.9 g, 19.0 mmol), Novozyme 435 (1.0 g), acetone (95 mL) and 3 Å molecular sieves (20.6 g) was stirred for 72 h, followed by workup, to give a crude residue (6.7 g). To a sample (340 mg) was added pyridine (1.5 mL) and NH₂OH, HCl (116 mg). The solution was stirred for 1 h and was shown by ¹³C NMR to consist of only 1,5-anhydro-6-*O*-palmitoyl-D-fructose oxime (**6b**). The remaining syrup (6.4 g) was purified by chromatography (100 g silica, eluted with hexane:EtOAc:EtOH, 4:1:0 then 0:4:1) to afford 1,5-anhydro-6-*O*-palmitoyl-D-fructose (**6a**) as an amorphous solid (1.6 g, 68%). This preparation was shown by ¹³C NMR [16] to consist of monomeric ketone (δ 82.6, C-5) (20%), dimer type I (δ 88.3, C-3') (20%) and dimer type II (δ 89.1, C-3') (60%). To a sample (58 mg) were added pyridine (1 mL) and NH₂OH, HCl (57 mg). The solution was stirred for 1 h and was shown by ¹³C NMR to consist of only 1,5-anhydro-6-*O*-palmitoyl-D-fructose oxime (**6b**). An analytical sample of **6b** was prepared by chromatography: mp 97-104 °C; [α]_{D} -13.4° (*c* 1.1 MeOH). Anal. Calcd for C₂₂H₄₁NO₆: C, 63.59; H, 9.94; N, 3.37. Found: C, 63.80; H, 9.69; N, 3.65.

*1,5-Anhydro-6*-O-*stearoyl*-D-*fructose* (**7a**).―By the same procedure as for **4a,** a mixture of 1,5-anhydro-D-fructose (**1**) (1.1 g, 6.6 mmol), stearic acid (5.7 g, 20.0 mmol), Novozyme 435 (1.1 g), acetone (95 mL) and 3 Å molecular sieves (21.7 g) was stirred for 168 h. Workup gave a crude residue (7.5 g). To a sample (230 mg) was added pyridine (1.0 mL) and NH₂OH, HCl (110 mg). The solution was stirred for 1 h and was shown by ¹³C NMR to consist of only 1,5-anhydro-6-*O*-stearoyl-D-fructose oxime (**7b**). The remaining residue (7.3 g) was purified by chromatography (100 g silica, eluted with hexane:EtOAc:EtOH 8:1:0 then 0:4:1) to afford 1,5-anhydro-6-*O*-stearoyl-D-fructose (**7a**) as an amorphous solid (1.8 g, 65%). This preparation was shown by ¹³C NMR [16] to consist of monomeric ketone (δ 82.6, C-5) (25%), dimer type I (δ 88.3, C-3') (50%) and dimer type II (δ 89.1, C-3') (25%). To a sample (69 mg) were added pyridine (0.7 mL) and NH₂OH, HCl (73 mg). The solution was stirred for 1 h and was shown by ¹³C NMR to consist of only 1,5-anhydro-6-*O*-stearoyl-D-fructose oxime (**7b**). An analytical sample of **7b** was prepared by chromatography: mp 99-105 °C; [α]_{D} -13.0° (*c* 1.1 MeOH). Anal. Calcd for C₂₄H₄₅NO₆; C, 64.98; H, 10.22; N, 3.16. Found: C, 64.70; H, 9.82; N, 3.15.

### Use of Compound as Anti-Oxidant

### Use of Compound as an anti-oxidant in a 50% mayonnaise.

50% mayonnaise is used for salads, open sandwiches, etc. in both the catering and the retail trades. The low oil content of 50% mayonnaise makes it suitable for low-calorie applications.

A typical mayonnaise composition is as follows:

| | |
|---|---|
| Soya oil | 50.0% |
| Tarragon vinegar (10%) | 4.0% |
| Egg yolk | 3.5% |
| Sugar | 3.0% |
| Salt | 1.0% |
| Potassium sorbate | 0.1 % |
| Water | 35.2% |
| MAYODAN 602 | 3.0% |
| Lemon flavouring 10251 | 0.2% |

MAYODAN 602 ensures a fine, stable oil dispersion and the required viscosity, thereby providing 50% mayonnaise with a long shelf life.

Flavouring 10251 is a natural lemon flavouring which provides mayonnaise with the fresh taste of lemon.

Typically the mayonnaise is prepared by the following method:
1) Dry mix the MAYODAN 602, sugar and salt. Disperse in oil in a ratio of 1 part powder to 2 parts oil.
2) Add flavouring and potassium sorbate to the water and pour into the Koruma mixer. Add 1).
3) Add the egg yolk.
4) Add the oil continuously in a vacuum.
5) After 2/3 of the oil has been added (slowly), blend the tarragon vinegar with the remaining 1/3 of the oil, and add.

When the compound of the present invention is added to the mayonnaise as an anti-oxidant the results are comparable to the known food anti-oxidants GRINDOX® 142 and GRINDOX® 1029.

| GRINDOX® 142: | |
|---|---|
| Ascorbyl palmitate | 10% |
| Propyl gallate | 20% |
| Citric acid | 10% |
| Food grade emulsifier | 60% |
| Form at 25°C | paste |
| Colour | grey to pale brown |
| Density | 1.1 g/ml |
| (All percentages are by weight) | |

| GRINDOX® 1029: | |
|---|---|
| Ascorbyl palmitate | 20% |
| Natural tocopherols | 20% |
| Food grade emulsifier | 60% |
| Form at 25°C | paste |
| Colour | light brown |
| Density at 25°C | 1.0 g/ml |
| (All percentages are by weight) | |

In the test procedure the anti-oxidant compounds were added to the mayonnaise to provide an anti-oxidant concentration in the order of about 500 ppm. The mayonnaise was then placed in a bomb calorimeter at temperature 80°C containing pure O₂. An induction period to the onset of substantial oxidation of the product is then measured.

The results show that the compounds of the present invention are excellent food anti-oxidants and are comparable with the known foodstuffs anti-oxidants GRINDOX® 142 or GRINDOX® 1029.

### Use of Compounds as an anti-oxidant in a yoghurt salad dressing with 50% oil

Yoghurt salad dressing with 50% oil is used for salads, potatoes, raw vegetable salad, meat, fish and boiled vegetables.

| **Composition** | |
|---|---|
| Soya oil | 50.0% |
| Yoghurt (plain) | 39.0% |
| Vinegar (10%) | 3.5% |
| Sugar | 3.0% |
| Egg yolk | 2.0% |
| Salt | 1.0% |
| Potassium sorbate | 0.1 % |
| MAYODAN 525 | 1.4% |
| Acid masking flavouring 2072 | 0.02% |

MAYODAN 525 provides unique emulsion stability, prevents syneresis, ensures uniform oil dispersion and viscosity, improves tolerance to production processes and ensures a long shelf life.

Flavouring 2072 is a nature-identical, acid masking flavouring reducing the acidulated taste of dressing without affecting its pH value.

### Process

1. Dry mix MAYODAN 525, sugar and salt. Disperse in oil in a ratio of 1 part powder to 2 parts oil.
2. Fill flavouring, potassium sorbate and yoghurt into the Koruma mixer. Add 1).
3. Add the egg yolk.
4. Add the oil continuously in a vacuum.
5. After 2/3 of the oil has been added (slowly), blend the vinegar with the remaining 1/3 of the oil, and add.
6. Add spices if required.

The compositions were tested as described above. The results show that the compounds of the present invention are excellent food anti-oxidants.

### Emulsifying Properties

### Test of compound of interest as emulgator in a w/o emulsifier

| Materials: | |
|---|---|
| 1) | 83.4% soya bean oil (84 ml) |
| | 16.6% water (16.6g) |
| | |
| 2) | 83.4% soya bean oil (84 ml) |
| | 16.2% water (16.2g) |
| | 0.4% GRINDSTED® CITREM BC (0.4g) |
| | |
| 3) | 83.4% soya bean oil (84 ml) |
| | 16.2% water (16.2g) |
| | 0.4% DIMODAN® PVP (0.4g) |
| | |
| 4) | 83.4% soya bean oil (84 ml) |
| | 16.2% water (16.2g) |
| | 0.4% COMPOUND OF INTEREST (0.4g) |

### Methods:

1. The oil is heated to 60°C
2. 84 ml warm soya bean oil (with or without emulsifier) is weighed in a 400 ml cup and then stirred (Heidolph, speed 2.5) in a waterbath at 60°C.
3. The weighed quantity of distilled water (pH 4.7) is added to the oil during while being stirred. The stirring is continued for 20 minutes, and the emulsion is kept at 60°C.

Just after the emulsification, a sample of the emulsion is studied in a microscope. The rest of the emulsion is poured into a cup which is placed at room temperature. Separation of water and possibly oil after some time is followed.

| Results | | | | |
|---|---|---|---|---|
| | No emulsifier | GRINDSTED® CITREM BC | DIMODAN® PVP | Compound of Interest |
| Size of drops just after emulsification * | Large drops | Small and finely spread drops | Medium size drops - look stable | Small + medium size drops. Finely spread. |
| Stability ** | 5 min | 60 min | 60 min | 20 min |

| | | | | |
|---|---|---|---|---|
| * photos from light microscope to follow. | | | | |
| ** Time before approx. 15 ml water was separated from the emulsion. | | | | |

### Conclusions

The Compound of Interest acts as w/o emulsifier. The CoI's emulsification properties - assessed as the ability to create small water drops - are close to GRINDSTED® CITREM BS and better than DIMODAN® PVP. The emulsification with the CoI is considerably more stable than the control without emulsifier.

GRINDSTED® CITREM BC is Citric Acid Ester/Monoglyceride Blend

DIMODAN® PVP is Distilled Monoglyceride.

### References

[1] T. Kurata, N. Miyake, and Y. Otsuka, *Biosci. Biotech. Biochem*., 60(7) (1996) 1212-1214.
[2] S. Yu and M. Pedersén, *Planta,* 191 (1993) 137-142.
[3] S. Yu, L. Kenne, and M. Pedersén, *Biochim. Biophys. Acta,* 1156 (1993) 313-320.
[4] S. Yu, T. Ahmad, L. Kenne, and M. Pedersén, *Biochim. Biophys*. *Acta*, 1244 (1995) 1-9.
[5] A. Ducret, A. Giroux, M. Trani, and R. Lortie, *JAOCS,* 73(1) (1996) 109-113.
[6] I. Rico-Lattes and A. Lattes, *Colloids and Surfaces A,* 123-124 (1997) 37-48.
[7] T. Madsen, G. Petersen, C. Seierø, and J. Tørsløv, *JAOCS,* 73(7) (1996) 929-933.
[8] S.J.H.F Arts, E.J.M. Mombarg, H. van Bekkum, and R.A. Sheldon, *Synthesis*, (1997) 597-613.
[9] P.O. Kvemberg and B. Pedersen, *Acta Chem. Scand*., 48 (1994) 646-651.
[10] O. *Theander, Acta Chem. Scand.,* 12 (1958) 1887-1896.
[11] H.-M. Liu and Y. Tsuda, *Chem. Pharm. Bull.,* 44(1) (1996) 80-87.
[12] T. Ahmad, Thesis, Uppsala, Sweden, 1995.
[13] K. Morisaki and S. Ozaki, *Chem. Pharm. Bull.,* 44(9) (1996) 1647-1655.
[14] K. Morisaki and S. Ozaki, *Carbohydr. Res.,* 286 (1996) 123-138.
[15] S. Freimund and S. Köpper, *Carbohydr. Res.,* 308 (1998) 195-200.
[16] S.M. Andersen, I. Lundt, J. Marcussen, I. Søtofte, and S. Yu, *J*. *Carbohydr. Chem.,* 17(7) (1998) 1027-1035.
[17] E. Reinefeld and H.-F. Kom, *Die Stärke*, 20(6) (1968) 181-189.
[18] D. Plusquellec and K. Baczko, *Tetrahedron Lett*., 28(33) (1987) 3809-3812.
[19] S. Bottle and I.D. Jenkins, *J. Chem. Soc., Chem. Commun.,* (1984) 385.
[20] M. Therisod and A.M. Klibanov, *J. Am. Chem. Soc.,* 108(18) (1986) 5638-5640.
[21] K. Faber and S. Riva, *Synthesis,* (1992) 895-910.
[22] N.B. Bashir, S.J. Phythian, A.J. Reason, and S.M. Roberts, *J. Chem. Soc., Perkin Trans. 1*, (1995) 2203-2222.
[23] J.A. Arcos, M. Bernabé, and C. Otero, *Biotech. Bioeng*., 57(5) (1998) 505-509.
[24] L. Cao, U.T. Bornscheuer, and R.D. Schmid, *Fett*/*Lipid*, 98(10) (1996) 332-335.
[25] F. Björkling, S.E. Godtfredsen, and O. Kirk, *J. Chem. Soc., Chem. Commun.* (1989) 934-935.
[26] K. Adelhorst, F. Björkling, S.E. Godtfredsen, and O. Kirk, *Synthesis,* (1990), 112-115.
[27] C. Tsitsimpikou, H. Stamatis, V. Sereti, H. Daflos, and F.N. Kolisis, *J. Chem. Technol. Biotechnol*., 71 (1998) 309-314.

## Claims

1. A derivatised anhydrofructose comprising a hydrophobic group linked (directly or indirectly) to a C of an anhydrofructose moiety.

2. A derivatised anhydrofructose according to claim 1, wherein the hydrophobic group is attached indirectly to a C of an anhydrofructose moiety.

3. A derivatised anhydrofructose according to claim 2, wherein the hydrophobic group is attached to the C₆ of the anhydrofructose moiety.

4. A derivatised anhydrofructose according to claim 3, wherein the hydrophobic group is attached to C₆ of the anhydrofructose moiety *via* an ester group.

5. A derivatised anhydrofructose according to any one of claims 1 to 4, wherein the hydrophobic group is a fatty acid.

6. A derivatised anhydrofructose according to any one of claims 1 to 5, wherein the derivatised anhydrofructose is prepared by chemically derivatising anhydrofructose.

7. A derivatised anhydrofructose according to any one of claims 1 to 5, wherein the derivatised anhydrofructose is prepared by enzymatically derivatising anhydrofructose.

8. An antioxidant composition comprising the derivatised anhydrofructose according to any one of claims 1 to 7 optionally in admixture with any suitable carrier or diluent.

9. Use of a derivatised anhydrofructose according to any one of claims 1 to 7 as an antioxidant.

10. Use of a derivatised anhydrofructose according to any one of claims 1 to 7 as an emulsifier.

11. Use of a derivatised anhydrofructose according to any one of claims 1 to 7 as an antioxidant and as an emulsifier..

12. A food product, or a composition for use in the manufacture of a food product, comprising a derivatised anhydrofructose according to any one of claims 1 to 7.

## Patentansprüche

1. Derivatisierte Anhydrofruktose mit einer hydrophoben Gruppe, die (direkt oder indirekt) mit einem C eines Anhydrofruktoserestes verknüpft ist.

2. Derivatisierte Anhydrofruktose nach Anspruch 1, wobei die hydrophobe Gruppe indirekt mit einem C eines Anhydrofruktoserestes verbunden ist.

3. Derivatisierte Anhydrofruktose nach Anspruch 2, wobei die hydrophobe Gruppe mit dem C₆ des Anhydrofruktoserestes verbunden ist.

4. Derivatisierte Anhydrofruktose nach Anspruch 3, wobei die hydrophobe Gruppe mit dem C₆ des Anhydrofruktoserestes über eine Estergruppe verbunden ist.

5. Derivatisierte Anhydrofruktose nach einem der Ansprüche 1 bis 4, wobei die hydrophobe Gruppe eine Fettsäure ist.

6. Derivatisierte Anhydrofruktose nach einem der Ansprüche 1 bis 5, wobei die derivatisierte Anhydrofruktose durch chemische Derivatisierung von Anhydrofruktose hergestellt ist.

7. Derivatisierte Anhydrofruktose nach einem der Ansprüche 1 bis 5, wobei die derivatisierte Anhydrofruktose durch enzymatische Derivatisierung von Anhydrofruktose hergestellt ist.

8. Antioxidanzienzusammensetzung, welche die derivatisierte Anhydrofruktose nach einem der Ansprüche 1 bis 7 optional im Gemisch mit einem geeigneten Träger oder Verdünnungsmittel umfaßt.

9. Verwendung einer derivatisierten Anhydrofruktose nach einem der Ansprüche 1 bis 7 als ein Antioxidanz.

10. Verwendung einer derivatisierten Anhydrofruktose nach einem der Ansprüche 1 bis 7 als ein Emulgiermittel.

11. Verwendung einer derivatisierten Anhydrofruktose nach einem der Ansprüche 1 bis 7 als ein Antioxidanz und als ein Emulgiermittel.

12. Nahrungsmittelprodukt oder eine Zusammensetzung für die Verwendung bei der Herstellung eines Nahrungsmittelprodukts, enthaltend eine derivatisierte Anhydrofruktose nach einem der Ansprüche 1 bis 7.

## Revendications

1. Anhydrofructose transformé en dérivé, comprenant un groupe hydrophobe lié (directement ou indirectement) à un atome de C d'un groupement anhydrofructose.

2. Anhydrofructose transformé en dérivé suivant la revendication 1, dans lequel le groupe hydrophobe est fixé indirectement à un atome de C d'un groupement anhydrofructose.

3. Anhydrofructose transformé en dérivé suivant la revendication 2, dans lequel le groupe hydrophobe est fixé à l'atome C₆ du groupement anhydrofructose.

4. Anhydrofructose transformé en dérivé suivant la revendication 3, dans lequel le groupe hydrophobe est fixé à l'atome C₆ du groupement anhydrofructose par un groupe ester.

5. Anhydrofructose transformé en dérivé suivant l'une quelconque des revendications 1 à 4, dans lequel le groupe hydrophobe est un acide gras.

6. Anhydrofructose transformé en dérivé suivant l'une quelconque des revendications 1 à 5, ledit anhydrofructose transformé en dérivé étant préparé en transformant chimiquement en dérivé l'anhydrofructose.

7. Anhydrofructose transformé en dérivé suivant l'une quelconque des revendications 1 à 5, ledit anhydrofructose transformé en dérivé étant préparé en transformant enzymatiquement en dérivé l'anhydrofructose.

8. Composition d'antioxydant comprenant l'anhydrofructose transformée en dérivé suivant l'une quelconque des revendications 1 à 7, éventuellement en mélange avec n'importe quel support ou diluant convenable.

9. Utilisation d'un anhydrofructose transformé en dérivé suivant l'une quelconque des revendications 1 à 7 comme antioxydant.

10. Utilisation d'un anhydrofructose transformé en dérivé suivant l'une quelconque des revendications 1 à 7 comme émulsionnant.

11. Utilisation d'un anhydrofructose transformé en dérivé suivant l'une quelconque des revendications 1 à 7 comme antioxydant et comme émulsionnant.

12. Produit alimentaire, ou composition destinée à être utilisée dans la préparation d'un produit alimentaire, comprenant un anhydrofructose transformé en dérivé suivant l'une quelconque des revendications 1 à 7.
